(19) Europäisches Patentamt / European Patent Office / Office européen des brevets

(11) **EP 2 485 930 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(21) Anmeldenummer: **10742493.9**

(22) Anmeldetag: **11.08.2010**

(51) Int Cl.:
**B60T 13/74** *(2006.01)*

(86) Internationale Anmeldenummer:
**PCT/EP2010/061699**

(87) Internationale Veröffentlichungsnummer:
**WO 2011/042238 (14.04.2011 Gazette 2011/15)**

(54) **VERFAHREN ZUM BETREIBEN EINES BREMSKRAFTVERSTÄRKTEN BREMSSYSTEMS EINES FAHRZEUGS UND STEUERVORRICHTUNG FÜR EIN BREMSKRAFTVERSTÄRKTES BREMSSYSTEM EINES FAHRZEUGS**

METHOD FOR OPERATING A BRAKE-BOOSTED BRAKE SYSTEM OF A VEHICLE, AND CONTROL DEVICE FOR A BRAKE-BOOSTED BRAKE SYSTEM OF A VEHICLE

PROCÉDÉ POUR FAIRE FONCTIONNER UN SYSTÈME DE FREINAGE ASSISTÉ D'UN VÉHICULE ET DISPOSITIF DE COMMANDE POUR UN SYSTÈME DE FREINAGE ASSISTÉ D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.10.2009 DE 102009045415**

(43) Veröffentlichungstag der Anmeldung:
**15.08.2012 Patentblatt 2012/33**

(73) Patentinhaber: **Robert Bosch GmbH**
**70442 Stuttgart (DE)**

(72) Erfinder:
- **VOLLERT, Herbert**
  **71665 Vaihingen/Enz (DE)**
- **KNEIP, Frank**
  **74360 Ilsfeld (DE)**
- **MAHNKOPF, Dirk**
  **71634 Eglosheim (DE)**

(56) Entgegenhaltungen:
EP-A1- 1 759 989    DE-A1- 10 327 553
US-A1- 2009 115 242

**Beschreibung**

Die Erfindung betrifft ein Verfahren zum Betreiben eines bremskraftverstärkten Bremssystems eines Fahrzeugs. Ebenso betrifft die Erfindung eine Steuervorrichtung für ein bremskraftverstärktes Bremssystem eines Fahrzeugs. Des Weiteren betrifft die Erfindung einen Bremskraftverstärker und ein bremskraftverstärktes Bremssystem.

Stand der Technik

Um einem Fahrer eines Fahrzeugs ein komfortables Betätigen eines Betätigungselements eines Bremssystems, wie beispielweise eines Bremspedals, zu ermöglichen, weist ein Bremssystem in der Regel einen Bremskraftverstärker auf. Der Bremskraftverstärker ist dazu ausgelegt, eine Unterstützungskraft bereitzustellen, welche zusätzlich zu einer von dem Fahrer des Fahrzeugs über das Betätigen des Betätigungselements bereitgestellten Fahrerbremskraft das Abbremsen mindestens eines Rads bewirkt.

In der DE 103 27 553 A1 ist beispielsweise ein elektromechanischer Bremskraftverstärker beschrieben, welcher dazu ausgelegt ist, eine Fahrerbremskraft, welche bei einer Betätigung des Bremspedals auf eine mit dem Hauptbremszylinder verbundene Kolbenstange ausgeübt wird, zu messen und unter Berücksichtigung der gemessenen Fahrerbremskraft eine zusätzliche Verstärkerkraft auf den Hauptbremszylinder auszuüben. Die Höhe der mittels des elektromechanischen Bremskraftverstärkers ausgeübten Verstärkerkraft kann auch unter Berücksichtigung einer Pedalgeschwindigkeit des Bremspedals festgelegt werden.

Offenbarung der Erfindung

Die Erfindung schafft ein Verfahren zum Betreiben eines bremskraftverstärkten Bremssystems eines Fahrzeugs mit den Merkmalen des Anspruchs 1 und eine Steuervorrichtung für ein bremskraftverstärktes Bremssystem eines Fahrzeugs mit den Merkmalen des Anspruchs 7.

Die vorliegende Erfindung beruht auf der Erkenntnis, dass eine Ist-Geschwindigkeitsgröße bezüglich einer Verstellgeschwindigkeit des Unterstützungskolbens des Bremssystems und eine Relativgeschwindigkeitsgröße bezüglich der Relativgeschwindigkeit des Unterstützungskolbens in Bezug zu dem Eingangskolben mindestens eine Information über einen aktuellen Zustand des mindestens einen Bremskreises des bremskraftverstärkten Bremssystems enthalten können.

Des Weiteren basiert die vorliegende Erfindung auf der Erkenntnis, dass es vorteilhaft ist, die Ist-Geschwindigkeitsgröße und die Relativgeschwindigkeitsgröße beim Ansteuern des Bremskraftverstärkers zu berücksichtigen. Durch das Festlegen der Soll-Geschwindigkeitsgröße bezüglich der Verstellgeschwindigkeit des Unterstützungskolbens unter der zusätzlichen Berücksichtigung der ermittelten Ist-Geschwindigkeitsgröße und der ermittelten Relativgeschwindigkeitsgröße ist es möglich, trotz einer temperaturbedingten Zustandsänderung, einer alterungsbedingten Zustandsänderung und/oder einer Funktionsänderung/Aktivierung mindestens einer Hydraulik-Einrichtung des mindestens einen Bremskreises eine bevorzugte Stellung des Eingangskolbens, beispielsweise eine durch die Fahrerbremskraft bedingte Standart-Stellung einzuhalten, beziehungsweise zu gewährleisten. Unter einer durch die Fahrerbremskraft bedingten Standart-Stellung wird eine Stellung des Eingangskolbens verstanden, welche sich lediglich bei einer Änderung der ausgeübten Fahrerbremskraft, jedoch kaum aufgrund einer temperaturbedingten Zustandsänderung in einem nicht-extremen Wertebereich, einer alterungsbedingten Zustandsänderung, bei welcher die wesentliche Funktionsfähigkeit des Bremssystems noch gewährleistet ist, und/oder einer Funktionsänderung/Aktivierung mindestens einer Hydraulik-Einrichtung ändert. Entsprechend kann auch eine bevorzugte Stellung und/oder eine verbesserte Funktionsweise des Betätigungselements eingehalten, beziehungsweise realisiert werden. Den Fahrer wird somit trotz einer temperaturbedingten Zustandsänderung und/oder einer alterungsbedingten Zustandsänderung des mindestens einen Bremskreises nicht durch ein verändertes Verhalten des Betätigungselements irritiert. Ebenso spürt der Fahrer keine Rückwirkung, insbesondere keinen Rückstoß, bei einer Aktivierung oder Deaktivierung der mindestens einen Hydraulik-Einrichtung des mindestens einen Bremskreises. Somit ist ein verbesserter Bedienkomfort des Betätigungselements für den Fahrer gewährleistet.

Das Betätigungselement des Bremssystems kann beispielsweise ein Bremspedal sein. Unter dem Eingangskolben ist eine Einrichtung zur mechanischen/hydraulischen Kopplung des Betätigungselements an ein Kraft-Druck-Umwandlungselement zu verstehen. Entsprechend ist mit dem Unterstützungskolben eine Einrichtung zur mechanischen/hydraulischen Kopplung des Bremskraftverstärkers an das Kraft-Druck-Umwandlungselement gemeint. Die vorliegende Erfindung ist somit nicht auf eine Ausbildung des Eingangskolbens und/oder des Unterstützungskolbens im engeren Sinn des Begriffs eingeschränkt. Vorzugsweise sind der Eingangskolben und/oder der Unterstützungskolben so ausgebildet, dass sie über das Kraft-Druck-Umwandlungselement ein direktes Einbremsen des Fahrers in mindestens einem Bremskreis seines Fahrzeugs ermöglichen. Unter dem Eingangskolben und/oder dem Unterstützungskolben kann insbesondere auch eine Einrichtung zur hydraulischen Kraftübertragung verstanden werden.

Das Kraft-Druck-Umwandlungselement ist beispielsweise ein Hauptbremszylinder, an welchen mindestens ein Bremskreis angeschlossen ist. Jeder dieser Bremskreise kann mindestens einen Radbremszylinder umfassen, mittels welchem ein zugeordnetes Rad des Fahrzeugs abbremsbar ist.

Der Eingangskolben und der Unterstützungskolben können über mindestens ein Koppelelement an das Kraft-Druck-Umwandlungselement angekoppelt sein. Das Koppelelement ist vorzugsweise eine Elastizität, wie beispielsweise eine Reaktionsscheibe. Die vorliegende Erfindung ist jedoch nicht auf eine Ausbildung des Koppelelements als elastische Reaktionsscheibe beschränkt. Die Reaktionsscheibe kann beispielsweise auch fest sein.

Zwischen der Reaktionsscheibe und dem Kraft-Druck-Umwandlungselement, wie beispielsweise einem Hauptbremszylinder, kann ein Ausgangskolben angeordnet sein. Dabei ist unter dem Ausgangskolben eine Einrichtung zur mechanischen/hydraulischen Kopplung des Kraft-Druck-Umwandlungselements an den Hauptbremszylinder zu verstehen. Der Ausgangskolben ist somit nicht auf einen Kolben im engeren Sinn des Begriffs beschränkt.

Unter dem Ermitteln der Relativgeschwindigkeitsgröße bezüglich der Relativgeschwindigkeit des Unterstützungskolbens in Bezug zu dem Eingangskolben kann auch ein direktes Messen der Relativgeschwindigkeitsgröße verstanden. Die Relativgeschwindigkeitsgröße wird somit bevorzugterweise nicht anhand einer Differenz der Ist-Geschwindigkeitsgröße bezüglich der Verstellgeschwindigkeit des Unterstützungskolbens und einer entsprechenden Verstellgeschwindigkeitsgröße des Eingangskolbens festgelegt. In einer bevorzugten Ausführungsform kann die Relativgeschwindigkeitsgröße mittels eines Differenzwegsensors ermittelt werden. Als Alternative oder als Ergänzung dazu kann zum Ermitteln der Relativgeschwindigkeitsgröße auch eine Biegung mindestens einer Feder-Einrichtung, über welche der Eingangskolben mit dem Unterstützungskolben verbunden ist, ausgewertet werden. Insbesondere dazu kann dabei eine Biegegeschwindigkeit als Relativgeschwindigkeitsgröße ermittelt werden.

Das im Weiteren beschriebene Verfahren zum Betreiben des bremskraftverstärkten Bremssystems kann auch dazu angewandt werden, um trotz eines Aktivieren und/oder Deaktivieren eines nicht-hydraulischen Zusatz-Bremsmoments, beispielsweise einer zusätzlichen Reibungsbremse und/oder eines Generatormoments, ein bevorzugtes Soll-Bremsmoment einzuhalten und gleichzeitig eine bevorzugte Standard-Funktionsweise des Betätigungselements zu gewährleisten. Auf eine derartige Verwendung des Verfahrens und die sich daraus ergebenden Vorteile wird nachfolgend genauer eingegangen.

Die Vorteile des Verfahrens zum Betreiben des bremskraftverstärkten Bremssystems sind auch mittels einer entsprechenden Steuervorrichtung realisierbar. Des Weiteren sind die Vorteile auch bei einem ähnlich ausgebildeten Bremskraftverstärker für ein bremskraftverstärktes Bremssystem mit der Steuervorrichtung und bei einem entsprechenden bremskraftverstärkten Bremssystem eines Fahrzeugs mit der Steuervorrichtung gewährleistet.

Kurze Beschreibung der Zeichnungen

Weitere Merkmale und Vorteile der vorliegenden Erfindung werden nachfolgend anhand der Figuren erläutert.

Es zeigen:

Fig. 1A bis 1C schematische Darstellungen zum Erläutern einer Funktionsweise einer ersten Ausführungsform der Steuervorrichtung;

Fig. 2 eine schematische Darstellung einer zweiten Ausführungsform der Steuervorrichtung;

Fig. 3 ein Flussdiagramm zum Darstellen einer ersten Ausführungsform des Verfahrens;

Fig. 4 ein Flussdiagramm zum Darstellen einer zweiten Ausführungsform des Verfahrens; und

Fig. 5 ein Flussdiagramm zum Darstellen einer dritten Ausführungsform des Verfahrens.

Ausführungsformen der Erfindung

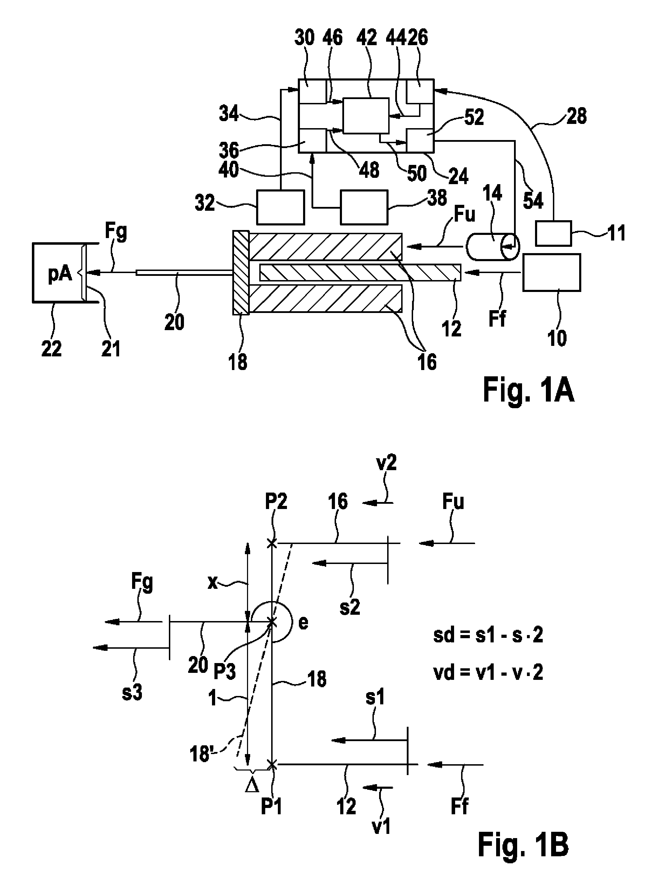

Fig. 1A bis 1C zeigen schematische Darstellungen zum Erläutern einer Funktionsweise einer ersten Ausführungsform der Steuervorrichtung.

Das in Fig. 1A teilweise schematisch wiedergegebene bremskraftverstärkte Bremssystem weist ein Betätigungselement 10 auf, welches beispielsweise als Bremspedal ausgebildet ist. Das Bremssystem ist jedoch nicht auf ein als Bremspedal ausgebildetes Betätigungselement 10 beschränkt. Über ein Betätigen des Betätigungselements 10 kann der Fahrer eine Fahrerbremskraft Ff und einen ersten Verstellweg s1 auf eine weiterleitende Komponente des Bremssystems, beispielsweise auf einen Eingangskolben 12, ausüben (siehe Ersatzschaltbild der Fig. 1 B). Dabei wird der Eingangskolben 12 mit einer ersten Verstellgeschwindigkeit v1 bewegt.

Die Fahrerbremskraft Ff und/oder eine der Fahrerbremskraft Ff entsprechende Größe sind mittels einer Betätigungselement-Sensorik erfassbar. Die Betätigungselement-Sensorik kann beispielsweise an dem Betätigungselement 10 oder an dem Eingangskolben 12 angeordnet sein. Bei der dargestellten Ausführungsform umfasst die Betätigungselement-Sensorik einen Bremskraft-Sensor 11, auf dessen Funktion unten noch genauer eingegangen wird.

Das Bremssystem umfasst mindestens einen Bremskraftverstärker 14. Der Bremskraftverstärker 14 ist dazu ausgelegt, eine Unterstützungskraft Fu bereitzustellen, damit der Fahrer die zum Abbremsen seines Fahrzeugs benötigte Kraft nicht vollständig als Fahrerbremskraft Ff aufbringen muss. Der Bremskraftverstärker 14 kann beispielsweise einen elektromechanischen Aktor, einen magnetischen Aktor und/oder eine Hydraulik umfassen. Der Bremskraftverstärker 14 ist nicht auf eine bestimmte Ausbildung eingeschränkt. Somit kann auch ein kostengünstiger und/oder wenig Bauraum erfordernder Bremskraftverstärker 14 für das Bremssystem verwendet werden.

Der Bremskraftverstärker 14 überträgt die Unterstützungskraft Fu und einen zweiten Verstellweg s2 auf einen Unterstützungskolben 16, welcher zusammen mit dem Eingangskolben 12 an ein Koppelelement, wie die gezeigte Reaktionsscheibe 18, gekoppelt ist. Durch das Aufbringen der Unterstützungskraft Fu auf den Unterstützungskolben 16 kann der Unterstützungskolben 16 mit einer zweiten Verstellgeschwindigkeit v2 bewegt werden.

In dem Ersatzschaltbild der Fig. 1B wirken der Eingangskolben 12 auf einen ersten Punkt P1 und der Unterstützungskolben 16 auf einen zweiten Punkt P2 der Reaktionsscheibe 18. Dabei entsprechen die Punkte P1 und P2 Flächen der Reaktionsscheibe 18. Beispielsweise entspricht der Punkt P2 bei einem rohrförmigen Unterstützungskolben 16 einer Ringfläche.

Die Reaktionsscheibe 18 kann als Kraftwaage, d. h. als deformierbares Element, ausgebildet sein. Das Bremssystem ist jedoch nicht auf die Verwendung einer klassischen Reaktionsscheibe 18 beschränkt. Anstelle der Reaktionsscheibe 18 kann das Bremssystem beispielsweise auch eine andere Elastizität aufweisen. Ebenso ist das Bremssystem nicht auf eine elastische Ausbildung der Reaktionsscheibe 18 eingeschränkt.

Das Betätigungselement 10 und der Bremskraftverstärker 14 sind so in dem Bremssystem angeordnet, dass zumindest die Fahrerbremskraft Ff und die Unterstützungskraft Fu eine Gesamtbremskraft Fg und einen dritten Verstellweg s3 bewirken, welche auf eine ausgangsseitig von dem Koppelelement angeordnete Komponente, wie beispielsweise auf den Ausgangskolben 20, übertragbar sind. Dabei ist der Ausgangskolben mit einer dritten Verstellgeschwindigkeit v3 verstellbar. Der Ausgangskolben 20 kontaktiert die Reaktionsscheibe 18 an einem dritten Punkt P3, bzw. an einer entsprechenden Fläche. Ein Quotient/Flächenverhältnis x gibt das Verhältnis eines ersten Abstands zwischen den Punkten P2 und P3 und eines zweiten Abstands zwischen den Punkten P3 und P1 an.

Im Falle einer elastischen Reaktionsscheibe 18 wird diese bei einer Fahrerbremskraft Ff $\neq$ 0 und/oder einer Unterstützungskraft Fu $\neq$ 0 deformiert, wie durch die gestichelte Linie 18' in Fig. 1B dargestellt ist. Die Verbiegbarkeit der Reaktionsscheibe 18 kann als Elastizität e angegeben werden.

Der Ausgangskolben 20 ist an eine verstellbare Komponente 21 eines Kraft-Druck-Umwandlungselements, beispielsweise eines Hauptbremszylinders 22, gekoppelt. An das Kraft-Druck-Umwandlungselement ist mindestens ein mit einem Bremsmedium gefüllter (nicht skizzierter) Bremskreis mit mindestens einem Radbremszylinder angeschlossen. Durch eine Veränderung eines Bremsdrucks in dem mindestens einen Radbremszylinder kann das mindestens eine zugeordnete Rad abgebremst werden.

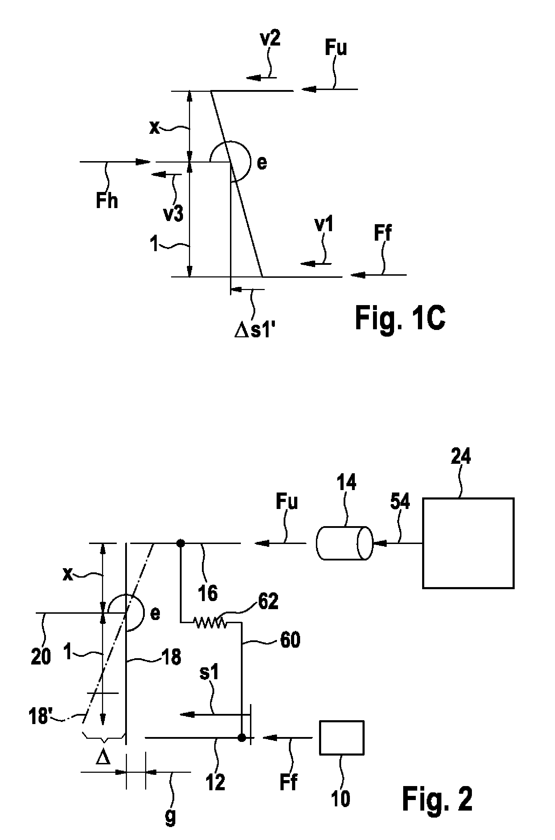

Zumindest die Fahrerbremskraft Ff und die von dem Bremskraftverstärker 14 bereitgestellte Unterstützungskraft Fu ergeben eine Gesamtkraft Fg. Damit das Betätigungselement 10, beziehungsweise der Eingangskolben 12, in einer zeitlich konstanten Stellung verbleiben, entspricht die Gesamtkraft Fg einer von dem Hauptbremszylinder 22 auf dem Ausgangskolben 20 ausgeübten Gegenkraft Fh (siehe Fig. 1C). Diese Gegenkraft Fh ergibt sich aus einem Druck p im Inneren des Hauptbremszylinders 22, einer Fläche A der verstellbaren Komponente 21 des Hauptbremszylinders 22 und Reibungskräften.

Das anhand der Fig. 1A bis 1C dargestellte Bremssystem weist eine Steuervorrichtung 24 auf, welche dazu ausgelegt ist, den Bremskraftverstärker 14 so anzusteuern, dass eine vorteilhafte Funktionsweise und eine benutzerfreundliche Stellung des Betätigungselements 10 gewährleistet sind. Die Steuervorrichtung 24 kann eine Untereinheit des Bremskraftverstärkers 14 sein. Als Alternative dazu kann die Steuervorrichtung 24 auch getrennt von dem Bremskraftverstärkter 14 in dem Bremssystem angeordnet sein. Ebenso kann die Steuervorrichtung 24 als eine Untereinheit eines zentralen Steuergeräts des Fahrzeugs mit dem dargestellten Bremssystem ausgebildet sein. Das Ausbilden des bremskraftverstärkten Bremssystems mit der Steuervorrichtung 24 erfordert somit in diesem Fall keinen zusätzlichen Bauraum des Bremssystems.

Auf die Ausbildung der Steuervorrichtung 24 und die damit realisierbaren Vorteile wird im Folgenden eingegangen:

Die Steuervorrichtung 24 weist eine erste Empfangseinrichtung 26 auf, welche derart ausgelegt ist, dass eine von dem Bremskraft-Sensor 11 bereitgestellte Bremskraftinformation 28 empfangbar ist. Die Bremskraftinformation 28 umfasst mindestens eine Größe/Information bezüglich der Betätigung des Betätigungselements 10 durch den Fahrer des Fahrzeugs. Die Bremskraftinformation 28 umfasst vorzugsweise die Fahrerbremskraft Ff, welche zumindest teilweise auf den Eingangskolben 12 übertragen wird. Als Alternative oder als Ergänzung dazu kann die Bremskraftinformation auch eine weitere die Fahrerbremskraft Ff beschreibende Größe umfassen.

Die erste Empfangseinrichtung 26 kann beispielsweise ein Dateneingang sein. Als Alternative dazu kann die erste Empfangseinrichtung 26 auch eine interne Schnittstelle sein, über welche die Bremskraftinformation 28 von einem als Untereinheit der Steuervorrichtung 26 ausgebildeten Bremskraft-Sensor bereitstellbar ist.

Die Steuervorrichtung 24 weist eine zweite Empfangseinrichtung 30 auf, mittels welcher die von einem ersten Geschwindigkeits-Sensor 32 bereitgestellte Ist-Geschwindigkeitsgröße 34 bezüglich der zweiten Verstellgeschwindigkeit v2 des Unterstützungskolbens 16 empfangbar ist. Der erste Geschwindigkeits-Sensor 32 kann als Untereinheit der Steuervorrichtung 24 oder extern von der Steuervorrichtung 24 ausgebildet sein. Entsprechend kann die zweite Empfangseinrichtung 30 beispielsweise als Dateneingang oder als interne Schnittstelle ausgebildet sein.

Die Ist-Geschwindigkeitsgröße 34 kann beispielsweise die zweite Verstellgeschwindigkeit v2 des Unterstützungskolbens 16 umfassen. Ebenso kann unter der Ist-Geschwindigkeitsgröße 34 eine andere Größe verstanden werden, welche eine zeitliche Änderung der Position des Unterstützungskolbens 16 wiedergibt. Die Ist-Geschwindigkeitsgröße 34 kann beispielsweise eine die Funktionsweise des Bremskraftverstärkers 14 beschreibende Größe, beispielsweise eine Information bezüglich einer zeitlichen Änderung einer Stellung einer Komponente des Bremskraftverstärkers 14, umfassen.

Der erste Geschwindigkeits-Sensor 32 kann insbesondere Bestandteil der Sensorik zur Steuerung/Regelung des Bremskraftverstärkers 14 sein. Mittels der Sensorik zu Steuerung/Regelung des Bremskraftverstärkers 14 sind beispielsweise die Position des Motors des Bremskraftverstärkers 14, die (daraus resultierende) Motorgeschwindigkeit, dessen Motormoment und/oder die (daraus resultierende) Unterstützungskraft Fu bekannt. Als erster Geschwindigkeits-Sensor 34 kann deshalb die bereits am Bremskraftverstärker 14 vorhandene Steuerung/Regelung des Bremskraftverstärkers 14 verwendet werden. Durch diese Multifunktionalität des ersten Geschwindigkeits-Sensors 34 ist eine kostengünstige Ausbildungsmöglichkeit des hier beschriebenen bremskraftverstärkten Bremssystems gewährleistet.

Die Steuervorrichtung 24 umfasst zusätzlich eine dritte Empfangseinrichtung 36. Die dritte Empfangseinrichtung 36 ist so an einen zweiten Geschwindigkeits-Sensor 38 gekoppelt, dass eine von dem zweiten Geschwindigkeits-Sensor 38 bereitgestellte Relativgeschwindigkeitsgröße 40 bezüglich einer Relativgeschwindigkeit vd des Unterstützungskolbens 16 in Bezug zu dem Eingangskolben 12 mittels der dritten Empfangseinrichtung 36 empfangbar ist. Auch die dritte Empfangseinrichtung 36 kann als Dateneingang oder als interne Schnittstelle ausgebildet sein. Entsprechend kann der zweite Geschwindigkeits-Sensor 38 zum Ermitteln der Relativgeschwindigkeitsgröße 40 intern oder extern von der Steuervorrichtung 24 ausgebildet werden.

Der zweite Geschwindigkeits-Sensor 38 ist vorzugsweise dazu ausgelegt, die Relativgeschwindigkeitsgröße 40 zu messen, anstatt sie anhand einer Differenz zwischen der ersten Verstellgeschwindigkeit v1 und der zweiten Verstellgeschwindigkeit v2, oder einer Differenz entsprechender Größen, zu berechnen. In einer bevorzugten Ausführungsform kann der zweite Geschwindigkeits-Sensor 38 als Differenzwegsensor ausgebildet sein. Beispielsweise kann der zweite Geschwindigkeits-Sensor 38 die Relativgeschwindigkeitsgröße 40 durch Erfassen einer Biegung einer Feder, über welche der Eingangskolben 12 mit dem Unterstützungskolben 14 verbunden ist, ermitteln.

Eine Auswerteeinrichtung 42 der Steuervorrichtung 24 ist derart an die Empfangseinrichtungen 26, 30 und 36 gekoppelt, dass den empfangenen Informationen 28, 34 und 40 entsprechende Datensignale 44, 46 und 48 von den Empfangseinrichtungen 26, 30 und 36 an die Auswerteeinrichtung 42 bereitstellbar sind. Die Auswerteeinrichtung 42 ist derart ausgelegt, dass eine Soll-Geschwindigkeitsgröße 50 bezüglich der zweiten Verstellgeschwindigkeit v2 des Unterstützungskolbens 16 unter Berücksichtigung der empfangenen Informationen 28, 34 und 40, beziehungsweise der Datensignale 44 bis 48, mittels der Auswerteeinrichtung 42 festlegbar ist. Auf eine vorteilhafte Vorgehensweise zum Festlegen der Soll-Geschwindigkeitsgröße 50 der zweiten Verstellgeschwindigkeit v2 wird unten noch genauer eingegangen. Die festgelegte Soll-Geschwindigkeitsgröße 50 wird anschließend von der Auswerteeinrichtung 42 an eine Steuereinrichtung 52 der Steuervorrichtung 24 ausgegeben.

Die Steuereinrichtung 52 ist derart ausgelegt, dass mittels der Steuereinrichtung 52 ein Steuersignal 54 unter Berücksichtigung der festgelegten Soll-Geschwindigkeitsgröße 50 der zweiten Verstellgeschwindigkeit v2 des Unterstützungskolbens 16 an den Bremskraftverstärker 14 ausgebbar ist. Vorzugsweise wird der Bremskraftverstärker 14 von dem Steuersignal 54 so angesteuert, dass die von dem Bremskraftverstärker 14 ausgeübte Unterstützungskraft Fu eine zweite Verstellgeschwindigkeit v2 des Unterstützungskolbens 16 gleich der festgelegten Soll-Geschwindigkeitsgröße 50 bewirkt.

Anhand der empfangenen Informationen 28, 34 und 40 kann die Steuervorrichtung 24 beispielsweise mindestens eine Information über eine Stellung/Stellungsänderung der Reaktionsscheibe 18, der verstellbaren Komponente 21 des Hauptbremszylinders 22 und/oder einen Zustand des an den Hauptbremszylinder 22 angekoppelten Bremskreises des Bremssystems festlegen. Ebenso lassen sich anhand der empfangenen Informationen 28, 34 und 40 mittels der Steuervorrichtung 24 auch eine Information bezüglich eines temperaturbedingten Zustands, eines alterungsbedingten Zustands und/oder einer aktuellen Funktionsweise mindestens einer Hydraulik-Einrichtung oder einer Reaction-Disc des mindestens einen Bremskreises festlegen/ermitteln.

Durch ein Heranziehen/Berücksichtigen der Informationen 28, 34 und 40 beim Festlegen der Soll-Geschwindigkeitsgröße 50 der zweiten Verstellgeschwindigkeit v2 des Unterstützungskolbens 16 ist der Bremskraftverstärker 14 so ansteuerbar, dass unabhängig von dem temperaturbedingten Zustand, dem alterungsbedingten Zustand und/oder der aktuellen Funktionsweise der mindestens einen Hydraulik-Einrichtung oder der Reaction-Disc des mindestens einen Bremskreises eine Stellung des Eingangskolbens 12 gewährleistbar ist, welche der Fahrer bei der aktuell aufgebrachten Fahrerbremskraft Ff erwartet. Eine Abweichung der Stellung des Eingangskolbens 12 von der der Fahrerbremskraft Ff entsprechenden Standard-Stellung, wie sie andernfalls aufgrund einer Temperaturänderung, einer Alterung des mindestens einen Bremskreises und/oder einer Aktivierung/Deaktivierung der mindestens einen Hydraulik-Einrichtung auftreten kann, ist somit verhinderbar.

Es kann vorkommen, dass die Stellung der verstellbaren Komponente 21 des Hauptbremszylinders 22 nicht der ausgeübten Fahrerbremskraft Ff entspricht. Ursachen für eine derartige Abweichung der Stellung der verstellbaren Komponente 21 von einer der Fahrerbremskraft entsprechenden Standard-Stellung können eine extreme Umgebungstemperatur des Bremssystems, eine alterungsbedingte Zustandsänderung des mindestens einen Bremskreises des Bremssystems und/oder eine Aktivierung/Deaktivierung einer Hydraulik-Einheit, wie beispielsweise einer Pumpe des mindestens einen Bremskreises, sein.

Das Abweichen der aktuellen Stellung der verstellbaren Komponente 21 von der der Fahrerbremskraft Ff entsprechenden Standard-Stellung kann aufgrund der Steuerung des Bremskraftverstärkers 14 durch die Steuervorrichtung 24 jedoch kein Abweichen der aktuellen Stellung des Eingangskolbens 12 aus einer der Fahrerbremskraft Ff entsprechenden Standard-Stellung des Eingangskolbens 12 bewirken. Somit ist auch ein für den Fahrer irritierendes Abweichen des Betätigungselements 10 aus seiner fahrerbremskraft-bedingten Standard-Stellung unterbunden.

Man kann dies auch so bezeichnen, dass mittels der ermittelten Informationen 28, 34 und 40 eine Soll-Geschwindigkeitsgröße 50 der zweiten Verstellgeschwindigkeit v2 des Unterstützungskolbens 16 so festlegbar ist, dass eine bevorzugte erste Verstellgeschwindigkeit v1 des Eingangskolbens 12 einhaltbar ist. Die eingehaltene erste Verstellgeschwindigkeit v1 des Eingangskolbens 12 kann gewährleisten, dass der Eingangskolben 12 in einer der Fahrerbremskraft Ff entsprechenden Standard-Stellung gehalten, beziehungsweise in die der Fahrerbremskraft entsprechende Standard-Stellung zurückgeführt wird. Beispielsweise kann der Bremskraftverstärker 14 so angesteuert werden, dass die erste Verstellgeschwindigkeit v1 trotz einer Volumenänderung des mindestens einen Bremskreises und/oder des Hauptbremszylinders 22 konstant bleibt.

Nachfolgend wird auf eine vorteilhafte Vorgehensweise zum Festlegen der Soll-Geschwindigkeitsgröße 50 eingegangen:

Bei der Beschreibung der vorteilhaften Vorgehensweise wird der Anschaulichkeit wegen davon ausgegangen, dass der Fahrer eine konstante Fahrerbremskraft Ff auf das Betätigungselement 10 ausübt. Die Anwendbarkeit der Vorgehensweise ist jedoch nicht auf eine zeitlich konstante Betätigung des Betätigungselements 10 durch den Fahrer beschränkt. Stattdessen ist sie auch anwendbar, wenn der Fahrer eine zeitlich variierende Fahrerbremskraft Ff auf das Betätigungselement 10 ausübt.

Wie oben schon beschrieben, kann mittels des zweiten Geschwindigkeits-Sensors 38 die Relativgeschwindigkeitsgröße 40 bezüglich einer zeitlichen Veränderung eines Differenzwegs sd erfasst werden. Der Differenzweg sd ist definiert durch:

$$(Gl\ 1) \qquad sd = s1 - s2.$$

Entsprechend gilt für eine anhand einer zeitlichen Veränderung des Differenzwegs sd festgelegten Relativgeschwindigkeit vd:

$$(Gl\ 2) \qquad vd = v1 - v2.$$

In Fig. 1C ist die Kinematik des bremskraftverstärkten Bremssystems anhand eines Zusammenhangs der einzelnen Verstellgeschwindigkeiten v1 bis v3 wiedergegeben. Dabei gilt:

$$(Gl\ 3) \qquad v1 = v3 + \Delta s1',$$

und

$$(Gl\ 4) \qquad v2 = v3 - x \cdot \Delta s1',$$

Aus der Differenz der Gleichungen (Gl 3) und (Gl 4) ergibt sich:

$$(Gl\ 5) \qquad v1 - v2 = (1+x) \cdot \Delta s1'$$

Unter Verwendung der Definition in Gleichung (Gl 1) ergibt sich somit:

$$(Gl\ 6) \qquad \Delta s1' = \frac{vd}{1+x}$$

Die Gleichung (Gl 6) kann in Gleichung (Gl 4) eingesetzt werden. Dies ergibt:

$$(Gl\ 7) \qquad v3 = v2 + x \cdot \frac{vd}{1+x}$$

Entsprechend der Gleichung (Gl 7) sind die von den Sensoren 32 und 38 bereitgestellten Informationen 34 und 40 zum Festlegen der dritten Verstellgeschwindigkeit v3 des Ausgangskolbens 20 geeignet. Somit ist es nicht notwendig, zum Ermitteln einer Information bezüglich einer aktuellen Stellung und/oder einer Verstellbewegung des Ausgangskolbens 20 einen Sensor direkt an den Ausgangskolben 20 anzubringen. Entsprechend entfällt auch die Notwendigkeit eines derartigen Sensors an der Reaktionsscheibe 18 oder an der verstellbaren Komponente 21 des Hauptbremszylinders 22.

Des Weiteren erkennt man anhand der Gleichung (Gl 7), dass ein unerwünschter dritter Verstellweg s3 und/oder eine dritte Verstellbewegung v3 des Ausgangskolbens 20 bezüglich einer Stellung des Eingangskolbens 12 korrigierbar sind.

Sofern ein direkter Kontakt zwischen dem Eingangskolben 12 und der Reaktionsscheibe 18 besteht, kann ein Zusammenhang zwischen der Fahrerbremskraft Ff und einer Verstellgröße Δ der Reaktionsscheibe 18 hergeleitet werden. Dabei gilt:

$$(Gl\ 8) \qquad sd = s0 + (1+x) \cdot \Delta,$$

wobei die Abgleichgröße s0 definiert ist durch:

$$(Gl\ 9) \qquad s1 = s0 + s3 + \Delta,$$

mit

$$(Gl\ 10) \qquad \Delta = \frac{Ff - x \cdot Fu - (1+x)(F0 + cf \cdot s0)}{e + (1+x)^2 \cdot cf},$$

wobei F0 eine Federkraft und cf eine Federkonstante einer Feder, über welche die Kolben 12 und 16 eventuell miteinander gekoppelt sind, sind.

Über die oben angegebenen Gleichungen (Gl 8) bis (Gl 10) kann eine Soll-Kennlinie für den ersten Verstellweg s1 ermittelt, bzw. festgelegt werden. Entsprechend kann eine Soll-Kennlinie für die erste Verstellgeschwindigkeit v1 ermittelt, bzw. festgelegt werden. (Dies ist auch gewährleistet, sofern der Fahrer keinen "konstanten Bremswunsch" hat, d. h. sofern der Fahrer die Verzögerung des Fahrzeugs zeitlich verändert).

Für die erste Soll-Verstellgeschwindigkeit $v1_s$ des Eingangskolbens 12 der bevorzugten Kennlinie kann gelten:

$$(Gl\ 11) \qquad v1_s = \frac{\partial s1(Ff)}{\partial Ff} \cdot Ff'$$

Analog zu den Gleichungen (Gl 3) und (Gl 4) gilt nun:

$$(\text{Gl } 12) \qquad v1_S = v3 + \Delta s1',$$

und

$$(\text{Gl } 13) \qquad v2_S = v3 + x \cdot \Delta s1'$$

Aus den Gleichungen (Gl 12) und (Gl 13) ergibt sich:

$$(\text{Gl } 14) \qquad v2_S = v3(1-x) + x \cdot v1_S$$

Die Gleichung (Gl 14) beschreibt eine vorteilhafte Relation zum Festlegen der Soll-Geschwindigkeitsgröße 50 der zweiten Verstellgeschwindigkeit v2 des Unterstützungskolbens. Über das Ausführen der auf diese Weise festgelegten Soll-Verstellgeschwindigkeitsgröße 50 ist gewährleistbar, dass der Eingangskolben 12 trotz einer extremen Umgebungstemperatur, einer alterungsbedingten Zustandsänderung des mindestens einen Bremskreises und/oder der Reaction-Disc und/oder eine Aktivierung/Deaktivierung einer Hydraulik-Einheit in einer von der Fahrerbremskraft Ff vorgegebenen Standard-Stellung vorliegt. Dies verbessert den Bedienkomfort des Bedienelements 10 erheblich.

Nachfolgend wird auf eine vorteilhafte Anwendungsmöglichkeit der Steuervorrichtung 24 eingegangen:

Bei der hier beschriebenen Anwendungsmöglichkeit wird von einer Verwendung des bremskraftverstärkten Bremssystems mit der Steuervorrichtung 24 in einem Fahrzeug mit einer zusätzlichen nicht-hydraulischen Bremsvorrichtung ausgegangen. Die nicht-hydraulische Bremsvorrichtung ist derart ausgebildet, dass ein zeitlich variierendes, nicht-hydraulisches Zusatz-Bremsmoment auf mindestens ein Rad des Fahrzeugs ausübbar ist. Die nicht-hydraulische Bremsvorrichtung kann beispielsweise ein Generator sein, mit welchem während eines Bremsvorgangs eine Fahrzeugbatterie aufladbar ist. Auch wenn nachfolgend von einem Fahrzeug mit einem Generator gesprochen wird, so ist die Anwendungsmöglichkeit jedoch nicht darauf beschränkt. Stattdessen sind auch bei anderen Ausführungsbeispielen der nicht-hydraulischen Bremsvorrichtung trotz einer zeitlichen Veränderung des Zusatz-Bremsmoments eine zeitlich konstante Fahrzeugverzögerung und ein guter Bedienkomfort des Betätigungselements 10 gewährleistet.

Während eines Bremsvorgangs ist eine (nicht skizzierte) Sensoreinrichtung dazu ausgelegt, eine Ist-Bremsgröße bezüglich des Zusatz-Bremsmoments zu ermitteln. Optional wird die Ist-Bremsgröße mittels einer (nicht dargestellten) Vergleichseinrichtung mit einer vorgegebenen Soll-Bremsgröße verglichen. Beispielsweise wird dabei festgestellt, dass die Ist-Bremsgröße um mindestens eine vorgegebene Höchstdifferenz von der Soll-Bremsgröße abweicht. Eine nachgeschaltete (nicht skizzierte) Auswerte- und Steuereinrichtung ist dazu ausgelegt, eine Soll-Bremsmomentänderung unter Berücksichtigung der ermittelten Ist-Bremsgröße und/oder eines Vergleichs der ermittelten Ist-Bremsgröße mit der vorgegebenen Soll-Bremsgröße festzulegen. Anschließend wird mindestens eine (nicht dargestellte) Hydraulik-Einrichtung mindestens eines Bremskreises des Fahrzeugs unter Berücksichtigung der festgelegten Soll-Bremsmomentänderung von der Auswerte- und Steuereinrichtung angesteuert.

Die Auswerte- und Steuereinrichtung ist über eine vierte Empfangseinrichtung an die Sensoreinrichtung oder an die Vergleichseinrichtung gekoppelt. Die mindestens eine Hydraulik-Einrichtung kann beispielsweise eine Pumpe und/oder ein Ventil sein. Das Ansteuern der Hydraulik-Einrichtung bewirkt dabei, dass ein der Soll-Bremsmomentänderung entsprechendes Bremsmediumvolumen entgegen einer Kraft in eine Speicherkammer und/oder in den Hauptbremszylinder 22 gefördert wird. Die dem Fördern des Bremsmediumvolumens entgegen wirkende Kraft ergibt sich aus der Gesamtkraft Fg.

Das Verschieben des Bremsmediumvolumens in eine Speicherkammer und/oder den Hauptbremszylinder 22 kann mittels eines als Hydraulik-Einrichtung ausgebildeten Stellers des mindestens einen Bremskreises, beispielsweise einer Komponente eines ABS-Systems oder eines ESP-Systems, ausgeführt werden. Man kann dies auch so bezeichnen, dass die Modifikation des Raddrucks zum Konstanthalten des gesamten Bremsmoments von einem Steller des ABS-Systems oder des ESP-Systems ausgeführt wird. Der reduzierte Raddruck führt in diesem Fall zu einer reduzierten Volumenaufnahme der Radbremse und somit zum Zurückströmen des Bremsmediumvolumens in den Hauptbremszylinder oder in die Speicherkammer.

Durch das Fördern des Bremsmediumvolumens aus dem mindestens einen Bremskreis ist ein Einhalten einer zeitlich konstanten Fahrzeugverzögerung, welche sich aus dem hydraulischen Bremsmoment des Bremssystems und dem Zusatz-Bremsmoment ergibt, trotz zeitlicher Schwankungen des Zusatz-Bremsmoments realisierbar. Die zeitlich konstante Fahrzeugverzögerung erfordert zusätzlich keine Modifizierung der von dem Fahrer auf das Bedienelement 10 ausgeübten Fahrerbremskraft Ff.

Die Sensoreinrichtung, die Vergleichseinrichtung, die vierte Empfangseinrichtung und/oder die Auswerte- und Steuereinrichtung können Untereinheiten der Steuervorrichtung 24 sein. Sie können auch getrennt von der Steuervorrichtung 24 am Bremssystem und/oder an einer zentralen Fahrzeugsteuerung ausgebildet sein.

Die Anwendungsmöglichkeit ist mittels eines kostengünstigen und einfach aufgebauten Bremssystems ausführbar. Zur Ausführung der Anwendungsmöglichkeit ng wird keine aufwendige zusätzliche Sensorik benötigt. Eine mechanische Kopplung zwischen dem Betätigungselement 10 und dem Hauptbremszylinder 22 beeinträchtigt die Anwendungsmöglichkeit nicht. Somit ist gewährleistet, dass der Fahrer bei einem Ausfallen des Bremskraftverstärkers 14 direkt in den mindestens einen Bremskreis hineinbremsen kann. Dies verbessert die Sicherheit des Bremssystems.

Aufgrund der Steuervorrichtung 24 ist zusätzlich gewährleistet, dass der pulsierende Volumenstrom durch das oben beschriebene "Zurücknehmen" des Bremskraftverstärkers 14 kompensiert wird. Die Pumpe muss somit nur einen geringen Pumpdruck aufbringen, so dass ein Zurückstoßen des Betätigungselements 10 unterbunden ist. Gleichzeitig wird die durch das verschobene Bremsmediumvolumen bewirkte Verstellung der verstellbaren Komponente 21 kompensiert. Somit ist trotz des verschobenen Bremsmediumvolumens eine bevorzugte Kennlinie für die Stellung des Eingangskolbens 12 einhaltbar.

Die in den vorhergehenden Absätzen beschriebene Vorgehensweise ist zum Verblenden eines aktivierten Zusatz-Bremsmoments und zum Verblenden eines deaktivierten Zusatz-Bremsmoments vorteilhaft. Auf ähnliche Weise sind weitere Einflüsse auf den Bremskreis, wie beispielsweise ein Temperatureinfluss auf die Bremsflüssigkeit und/oder eine alterungsbedingte Änderung mindestens einer Komponente des Bremskreises oder des Verstärkers, kompensierbar.

Auf die vorausgehend beschriebene Weise ist das Zusatz-Bremsmoment vollständig auszublenden. Gleichzeitig ermöglicht die Steuervorrichtung 24 ein Ausblenden einer Rückwirkung einer Verstellbewegung der verstellbaren Komponente 21 des Hauptbremszylinders auf das Betätigungselement 10. Damit ist das Zuschalten eines Generatormoments eines rekuperationsfähigen Bremssystems ausführbar, ohne dass der Fahrer dies bemerkt. Der Pedalweg und die Fahrzeugverzögerung werden durch das Zuschalten des Generatormoments nicht beeinflusst. Zusätzlich ist eine Ermittlung der notwendigen Bremskraft aus Gefälle und Fahrerbremswunsch gewährleistet.

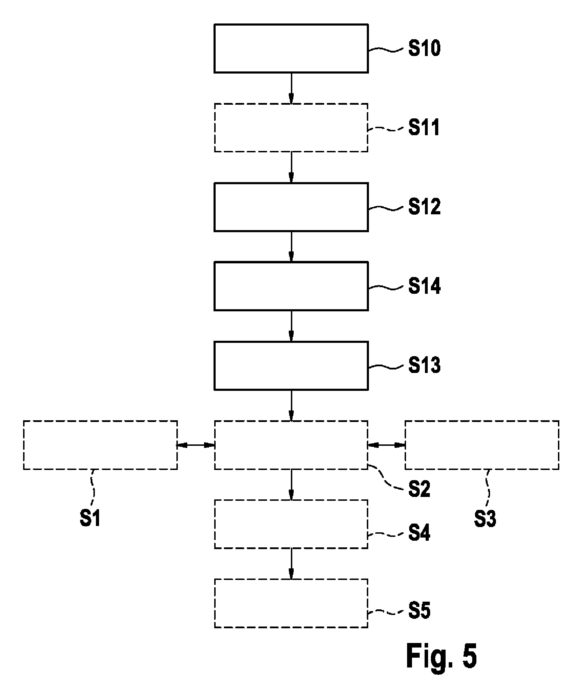

Wie nachfolgend in Bezug auf die Fig. 5 ausführlicher beschrieben wird, kann die Steuervorrichtung 24 auch nach einem Schließen eines Trennventils zwischen dem Hauptbremszylinder und der Hydraulik-Einrichtung als Pedalwegsimulator verwendet werden. Dies erfordert keine zusätzliche Hardware. Gleichzeitig gewährleistet die Steuervorrichtung 24 eine Überwachung der Bremsanlage, beziehungsweise der Reaktionsscheibe 18, inklusive einer In-Stopp Kalibrierung und einen Ausgleich von Alterungsvorgängen.

Fig. 2 zeigt eine schematische Darstellung einer zweiten Ausführungsform der Steuervorrichtung.

Die in Fig. 2 schematisch wiedergegebene Steuervorrichtung 24 weist die Komponenten der vorhergehend anhand der Fig. 1A bis 1C beschriebenen Steuervorrichtung auf. Auf eine erneute Beschreibung dieser Komponenten wird deshalb hier verzichtet.

Die Steuervorrichtung 24 ist dazu ausgelegt, einen Bremskraftverstärker 14 anzusteuern, welcher in ein Bremssystem mit einer Federkopplung 60 zwischen den Kolben 12 und 16 eingesetzt ist. Die Federkopplung 60 umfasst mindestens eine Feder 62, über welche der Eingangskolben 12 mit dem Unterstützungskolben 16 verbunden ist.

Aufgrund der Federkopplung 60 ist das dargestellte Bremssystem bei einer vergleichsweise niedrigen Fahrerbremskraft Ff in einem ersten Betriebsmodus betreibbar, in welchem ein Abstand $g \neq 0$ zwischen der Reaktionsscheibe 18 und dem Eingangskolben 12 vorliegt. In dem ersten Betriebsmodus des Bremssystems berührt der Eingangskolben 12 die Reaktionsscheibe 18 somit nicht. Man kann dies auch so bezeichnen, dass sich der Bremskraftverstärkter 14 im so genannten "Jump-In" befindet. In dem ersten Betriebsmodus des Bremssystems ist die Fahrerbremskraft Ff konstant, da durch die Feder 62 zwischen den Kolben 12 und 16 diesbezüglich geregelt wird. In diesem ersten Betriebsmodus ist aufgrund des Abstandes $g \neq 0$ eine Pedalrückwirkung bei einer Bremsmediumförderung in den Hauptbremszylinder unterbunden.

Bei einer größeren Fahrerbremskraft Ff geht das Bremssystem in einen zweiten Betriebsmodus über, in welchem $g = 0$ ist. Somit liegt in dem zweiten Betriebsmodus ein Kontakt zwischen dem Eingangskolben 12 und der Reaktionsscheibe 18 vor. Aufgrund der Verwendung der Steuervorrichtung 24 ist jedoch auch in dem zweiten Betriebsmodus bei einem Verschieben eines Bremsmediumvolumens in den Hauptbremszylinder eine Rückwirkung auf die Stellung des Betätigungselements 10 unterbunden.

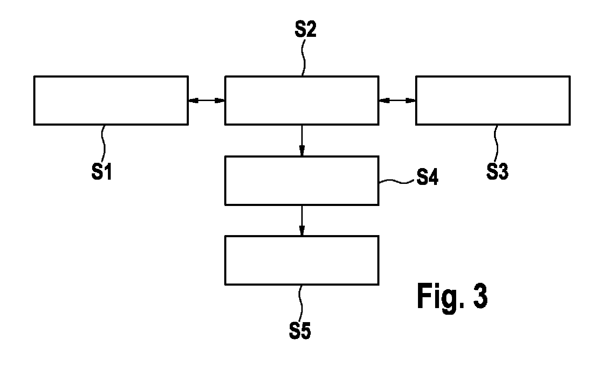

Fig. 3 zeigt ein Flussdiagramm zum Darstellen einer ersten Ausführungsform des Verfahrens.

In einem Verfahrensschritt S1 wird eine Bremskraftinformation bezüglich einer Fahrerbremskraft ermittelt. Die ermittelte Fahrerbremskraft ist eine Kraft, welche bei einer Betätigung eines Betätigungselements des Bremssystems, beispielsweise eines Bremspedals, durch einen Fahrer des Fahrzeugs auf das Betätigungselement ausgeübt wird. Dabei wird die Fahrerbremskraft zumindest teilweise auf einen Eingangskolben des Bremssystems übertragen.

Zusätzlich wird in einem Verfahrensschritt S2 eine Ist-Geschwindigkeitsgröße bezüglich einer Verstellgeschwindigkeit eines Unterstützungskolbens des Bremssystems ermittelt. Der Unterstützungskolben des Bremssystems ist so angeordnet, dass ein Bremskraftverstärker des Bremssystems eine Unterstützungskraft auf den Unterstützungskolben ausübt. Eine Gesamtkraft aus zumindest der auf den Eingangskolben übertragenen Kraft und der Unterstützungskraft wird über ein Kopplungselement auf ein Kraft-Druck-Umwandlungselement, beispielsweise einen Hauptbremszylinder, übertragen. Auf diese Weise kann ein Bremsdruck in mindestens einem an den Hauptbremszylinder angeschlossenen Bremskreis mit mindestens einem Radbremszylinder aufgebaut werden. Die ermittelte Ist-Geschwindigkeitsgröße kann beispielsweise eine Verstellgeschwindigkeit des Unterstützungskolbens und/oder eine Dreh- und/oder Verstell-Geschwindigkeit mindestens einer Komponente des Bremskraftverstärkers umfassen.

Des Weiteren wird in einem Verfahrensschritt S3 eine Relativgeschwindigkeitsgröße bezüglich einer Relativgeschwindigkeit des Unterstützungskolbens in Bezug zu dem Eingangskolben ermittelt. Vorzugsweise wird die Relativgeschwindigkeitsgröße mittels eines Differenzwegsensors ermittelt.

Die Nummerierung der oben beschriebenen Verfahrensschritte S1 bis S3 legt keine zeitliche Reihenfolge fest. Stattdessen können die Verfahrensschritte S1 bis S3 in beliebiger Reihenfolge und/oder zumindest teilweise gleichzeitig ausgeführt werden.

In einem nachfolgenden Verfahrensschritt S4 wird eine Soll-Geschwindigkeitsgröße bezüglich der Verstellgeschwindigkeit des Unterstützungskolbens unter Berücksichtigung der ermittelten Bremskraftinformation, der ermittelten Ist-Geschwindigkeitsgröße und der ermittelten Relativgeschwindigkeitsgröße festgelegt. Beispielsweise kann zum Festlegen der Soll-Geschwindigkeitsgröße eine Soll-Eingangskolbengeschwindigkeitsgröße unter Berücksichtigung der ermittelten Bremskraftinformation festgelegt werden. Danach kann die Soll-Geschwindigkeitsgröße unter zusätzlicher Berücksichtigung der festgelegten Soll-Eingangskolbengeschwindigkeitsgröße festgelegt werden.

Unter Berücksichtigung der festgelegten Soll-Geschwindigkeitsgröße wird in einem Verfahrenschritt S5 der Bremskraftverstärker angesteuert. Vorzugsweise erfolgt das Ansteuern des Bremskraftverstärkers so, dass der Unterstützungskolben unter Einhaltung der festgelegten Soll-Geschwindigkeitsgröße verstellt wird.

Nachfolgend werden vorteilhafte Anwendungsmöglichkeiten zum Ausführen des hier beschriebenen Verfahrens beschrieben.

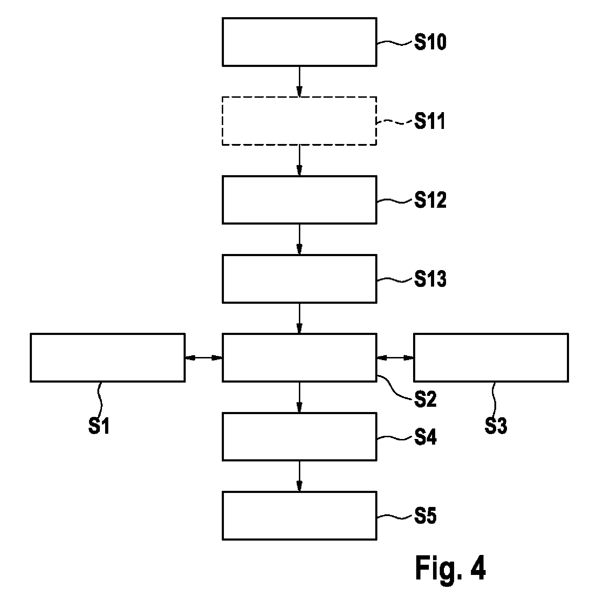

Fig. 4 zeigt ein Flussdiagramm zum Darstellen einer zweiten Ausführungsform des Verfahrens.

In einem Verfahrensschritt S10 wird eine Ist-Bremsgröße bezüglich eines von einer nicht-hydraulischen Bremsvorrichtung auf mindestens ein Rad des Fahrzeugs ausgeübten Zusatz-Bremsmoments ermittelt. Die nicht-hydraulische Bremsvorrichtung kann beispielsweise ein Generator sein, mit welchem während eines Bremsvorgangs eine Fahrzeugbatterie aufgeladen wird. Die Anwendungsmöglichkeit für das beschriebene Verfahren ist jedoch nicht auf ein Fahrzeug mit einem Generator beschränkt.

Die ermittelte Ist-Bremsgröße kann das nicht-hydraulische Zusatz-Bremsmoment umfassen. Als Alternative oder als Ergänzung dazu kann die ermittelte Ist-Bremsgröße auch ein Gesamt-Bremsmoment sein, welches auf mindestens ein Rad des Fahrzeugs ausgeübt wird. Das Gesamt-Bremsmoment kann eine Summe aus dem Zusatz-Bremsmoment und einem hydraulischen Bremsmoment, welches der Summe der Fahrerbremskraft und der Unterstützungskraft entspricht, sein. Zusätzlich kann das Gesamt-Bremsmoment mindestens ein weiteres mechanisches Bremsmoment umfassen.

In einem optionalen Verfahrensschritt S11 kann die ermittelte Ist-Bremsgröße mit einer vorgegebenen Soll-Bremsgröße verglichen werden. Beispielsweise kann in dem Verfahrensschritt S11 als Ist-Bremsgröße das Gesamt-Bremsmoment mit einem der Fahrerbremskraft entsprechenden Soll-Gesamtbremsmoment verglichen werden. Auf diese Weise ist gewährleistbar, dass trotz einer Veränderung des Zusatz-Bremsmoments während eines Bremsvorgangs die Verzögerung des Fahrzeugs der Betätigung des Betätigungselements durch den Fahrer entspricht. Als Alternative dazu kann in dem Verfahrensschritt S11 das Zusatz-Bremsmoment selbst als Ist-Bremsgröße mit einem als Soll-Bremsgröße vorgegebenen Schwellwert verglichen werden, ab welchem ein Verblenden des Zusatz-Bremsmoments auf die nachfolgend beschriebene Weise ausgeführt wirt.

In einem Verfahrensschritt S12 wird eine Soll-Bremsmomentänderung festgelegt. Das Festlegen der Soll-Bremsmomentänderung erfolgt unter Berücksichtigung der ermittelten Ist-Bremsgröße oder des Vergleichs der Ist-Bremsgröße mit der vorgegebenen Soll-Bremsgröße. Vorzugsweise folgt der Verfahrensschritt S12 dem Verfahrensschritt S11, sofern die Ist-Bremsgröße um mindestens eine vorgegebene Höchstdifferenz von der Soll-Bremsgröße abweicht. Die vorgegebene Höchstdifferenz kann auch gleich Null gesetzt sein.

Danach wird in einem weiteren Verfahrensschritt S13 mindestens eine Hydraulik-Einrichtung mindestens eines Bremskreises des Fahrzeugs unter Berücksichtigung der festgelegten Soll-Bremsmomentänderung angesteuert. Das Ansteuern der Hydraulik-Einrichtung bewirkt, dass ein der Soll-Bremsmomentänderung entsprechendes Bremsmediumvolumen entgegen einer Kraft in eine Speicherkammer und/oder in den Hauptbremszylinder gefördert wird. Vorzugsweise erfolgt das Ansteuern der mindestens einen Hydraulik-Einrichtung so, dass die festgelegte Soll-Bremsmomentänderung ausgeführt wird. Die Verfahrensschritte S10 bis S13 gewährleisten in diesem Fall, dass die Summe aus dem hydraulisch aufgebrachten Bremsmoment und dem Zusatz-Bremsmoment während der Bremsung konstant bleibt.

Die mindestens eine Hydraulik-Einrichtung kann eine Pumpe und/oder ein Ventil des mindestens einen Bremskreises sein. Die mindestens eine Hydraulik-Einrichtung kann eine Komponente eines ESP-Systems und/oder eines ABS-Systems des Fahrzeugs sein. Für die Ausführung des Verfahrensschritts S13 kann somit auf bereits am Bremssystem vorhandene Komponenten zurückgegriffen werden. Die Ausführung des hier beschriebenen Verfahrens erfordert somit keine zusätzlichen teuren Komponenten des Bremssystems.

Die mindestens eine Hydraulik-Einrichtung führt in dem Verfahrensschritt S13 vorzugsweise eine Modifikation des Raddrucks aus. In dem Fall, dass beispielsweise in dem Verfahrensschritt S12 ein Generatormoment Mgen als Soll-Bremsmomentänderung festgelegt wird, kann die mindestens eine Hydraulik-Einrichtung den Radbremsdruck um einen Differenzdruck Δp verändern, gemäß:

$$(Gl\ 15) \qquad \Delta p = -\frac{Mgen}{cp}$$

wobei die Größe cp eine Radbremszylinder spezifische Größe ist. Die in Gleichung (Gl 15) wiedergegebene Druckänderung ist über das ESP-Aggregat oder über das ABS-Aggregat einregelbar.

Das in den oberen Absätzen beschriebene Verfahren ist vor allem bei einem rekuperativen Bremsen, bei welchem ein Teil der Bewegungsenergie des Fahrzeugs in elektrische Energie umgewandelt wird, vorteilhaft. Das Generatormoment, welches ein zusätzliches Abbremsen des Fahrzeugs bewirkt, ist in der Regel abhängig von einer Geschwindigkeit des Fahrzeugs. Somit verändert sich das Generatormoment während der Bremsung. Über die Verfahrensschritte S10 bis S13 ist trotz des zeitlich variierenden Generatormoments bei einer gleichbleibenden Betätigung des Bremspedals eine konstante Verzögerung des Fahrzeugs gewährleistet.

Die in Gleichung (Gl 15) wiedergegebene Druckänderung in dem mindestens einen Bremskreis kann zu einer Änderung der Volumenaufnahme des Hauptbremszylinders führen. Beispielsweise wird bei einer Reduzierung des hydraulischen Bremsmoments (bei einem zunehmenden Zusatz-Bremsmoment) ein Bremsmediumvolumen in der Regel zunächst in eine Speicherkammer und anschließend in den Hauptbremszylinder zurückgepumpt. Entsprechend wird bei einem Wiederaufbauen des hydraulischen Bremsmoments/des Radbremsdrucks (bei einem abnehmenden Zusatz-Bremsmoment) ein Bremsmediumvolumen häufig aus der Speicherkammer und dem Hauptbremszylinder entnommen.

Um zu verhindern, dass aufgrund der veränderten Volumenaufnahme des Hauptbremszylinders die Stellung des Eingangskolbens und damit des Betätigungselements, verändert wird, können die anhand der Figur 3 schon beschriebenen Verfahrensschritte S1 bis S5 ausgeführt werden. Somit ist es möglich, nach einer Anpassung der Bremswirkung/Fahrzeug-Verzögerung entsprechend dem zeitlich variierenden Zusatz-Bremsmoment durch die Verfahrensschritte S10 bis S13 die Auswirkungen der Anpassung der Bremswirkung auf eine Stellung des Eingangskolbens zu kompensieren. Die Volumenaufnahme und/oder Volumenabgabe des Hauptbremszylinders verändert somit aufgrund des Ausführens der Verfahrensschritte S1 bis S5 nicht die Stellung des Eingangskolbens.

Durch die in den Verfahrensschritten S1 bis S5 ausgeführte Modifikation der Unterstützungskraft kann die Rückwirkung des veränderten Volumens des Hauptbremszylinders auf die Stellung des Eingangskolbens kompensiert werden. Vorzugsweise erfolgt dies so, dass der Eingangskolben trotz der Volumenänderung des Hauptbremszylinders in einer der Fahrerbremskraft entsprechenden Stellung verbleibt. Der Fahrer nimmt somit das Verblenden des zeitlich nicht-konstanten Zusatz-Bremsmoments weder über eine variierende Fahrzeugverzögerung noch über eine Veränderung der Stellung des Betätigungselements wahr.

Das in den oberen Absätzen beschriebene Verfahren ist auch mittels eines Bremssystems mit einer mechanischen Kopplung des Betätigungselements an den Hauptbremszylinder ausführbar, welches dem Fahrer ein direktes Einbremsen in den mindestens einen Bremskreis erlaubt und somit einen verbesserten Sicherheitsstandard bietet. Zusätzlich werden bei der Ausblendung des Zusatz-Bremsmoments die Regelung des Raddrucks und die Regelung der Eingangskolben-Stellung vollständig entkoppelt und unabhängig voneinander durchgeführt.

Fig. 5 zeigt ein Flussdiagramm zum Darstellen einer dritten Ausführungsform des Verfahrens.

Das Verfahren umfasst die schon beschriebenen Verfahrensschritte S10 bis S13. Diese können ausgeführt werden, um ein zeitlich variierendes Zusatz-Bremsmoment, welches mit einem hydraulischen Bremsmoment auf mindestens ein Rad des Fahrzeugs ausgeübt wird, durch eine Modifikation des hydraulischen Bremsmoments, beispielsweise unter Verwendung einer ESP-Hydraulikeinheit oder einer ABS-Hydraulikeinheit, zu verblenden. Das zusätzliche Bremsmoment kann beispielsweise ein Generatormoment sein. Auf eine erneute Ausführung der oben schon beschriebenen Verfahrensschritte S10 bis S13 wird hier verzichtet.

Vor oder während des Verfahrensschritts S13 wird in einem Verfahrensschritt S14 mindestens ein zwischen der mindestens einen angesteuerten Hydraulik-Einrichtung und dem Hauptbremszylinder angeordnetes Ventil, welches nachfolgend als mindestens ein Trennventil bezeichnet wird, geschlossen. Das mindestens eine Trennventil kann beispielsweise mindestens ein Einlassventil umfassen. Das für das Verblenden des Zusatz-Bremsmoments verschobene Bremsmediumvolumen wird somit nicht in den Hauptbremszylinder, sondern in mindestens eine Speicherkammer, verschoben.

In einem weiteren Verfahrenschritt kann der Bremskraftverstärkers während des geschlossenen Betriebsmodus des mindestens einen Trennventils als Pedalwegsimulator verwendet werden. Dabei wird die von dem Bremskraftverstärker ausgeübte Unterstützungskraft so festgelegt, dass die Stellung des Eingangskolbens und des Betätigungselements trotz des mindestens einen geschlossenen Trennventils der ausgeübten Fahrerbremskraft entsprechen. Das Betätigungselement lässt sich somit gewohnheitsmäßig durch den Fahrer verstellen und über die Verstellung des Betätigungselements ein Verzögern/Abbremsen des Fahrzeugs vorgeben.

Zusätzlich kann die Reaktionsscheibe, deren Lage auch bei einer Veränderung des Drucks in dem mindestens einen Bremskreis konstant bleibt, als Widerlager des als Pedalwegsimulator fungierenden Bremskraftverstärkers verwendet werden. Gleichzeitig kann die Soll-Bremsgröße unter Berücksichtigung der ermittelten Fahrerbremskraft über die Verfahrensschritte S10 bis S13 fortlaufend neu festgelegt und eingestellt werden. Der Fahrer empfindet somit die Reaktionsfähigkeit des Betätigungselements auch während des geschlossenen Betriebsmodus des mindestens einen Trennventils als normal.

Optional können die Verfahrensschritte S1 bis S5 ausgeführt werden, um den Bremskraftverstärker bei mindestens einem geschlossenen Trennventil als Pedalwegsimulator zu verwenden. Über die ermittelte Ist-Geschwindigkeitsgröße und die ermittelte Relativgeschwindigkeitsgröße ist das Schließen des mindestens einen Trennventils erfassbar. Durch das Berücksichtigen der beiden ermittelten Größen und der Fahrerbremskraftinformation kann die Soll-Geschwindigkeitsgröße so festgelegt werden, dass eine Veränderung der Fahrerbremskraft trotz des mindestens einen geschlossenen Trennventils eine der Veränderung entsprechende Verstellbewegung des Eingangskolbens bewirkt.

Bei der Verwendung des Bremskraftverstärkers als Pedalwegsimulator kann auf bereits bekannte Größen zurückgegriffen werden. Ein Verstellweg des Eingangskolbens entspricht beispielsweise einer Deformation der Reaktionsscheibe, welche von einer Regelung des Bremskraftverstärkers bereitstellbar ist. Gleichzeitig ermittelt die Regelung des Bremskraftverstärkers in der Regel fortlaufend den Weg des Motors des Bremskraftverstärkers. Ein Radbremsdruck ist mittels des ESP-Systems bereitstellbar. Eine Fahrerbremskraft kann über einen Vordrucksensor bestimmt werden. Alternativ besteht die Möglichkeit, aus der Unterstützungskraft und der Auslenkung der Reaktionsscheibe anhand eines Momentengleichgewichts die Fahrerbremskraft zu berechnen.

Beispielsweise wird die Soll-Geschwindigkeitsgröße so unter Berücksichtigung der Bremskraftinformation, der Ist-Geschwindigkeitsgröße und der Relativgeschwindigkeitsgröße festgelegt, dass eine vorgegebene Kennlinie der Stellung des Eingangskolbens bei einer veränderten Fahrerbremskraft eingehalten wird. Auch die Soll-Bremsgröße kann eine Kennlinie der Fahrerbremskraft sein. Die beiden Kennlinien können in einem Speicher einer Steuervorrichtung abgelegt sein.

**Patentansprüche**

**1.** Verfahren zum Betreiben eines bremskraftverstärkten Bremssystems eines Fahrzeugs mit den Schritten:

Ermitteln einer Bremskraftinformation (28) bezüglich einer Fahrerbremskraft (Ff), welche bei einer Betätigung eines Betätigungselements (10) des Bremssystems durch einen Fahrer des Fahrzeugs auf das Betätigungselement (10) ausgeübt wird und welche zumindest teilweise auf einen Eingangskolben (12) des Bremssystems übertragen wird (S1);
**gekennzeichnet durch** die Schritte:

Ermitteln einer Ist-Geschwindigkeitsgröße (34) bezüglich einer Verstellgeschwindigkeit (v2) eines Unterstützungskolbens (16) des Bremssystems, auf welchen eine Unterstützungskraft (Fu) eines Bremskraftverstärkers (14) des Bremssystems ausgeübt wird (S2);
Ermitteln einer Relativgeschwindigkeitsgröße (40) bezüglich einer Relativgeschwindigkeit (vd) des Unterstützungskolbens (16) in Bezug zu dem Eingangskolben (12) (S3);
Festlegen einer Soll-Geschwindigkeitsgröße (50) bezüglich der Verstellgeschwindigkeit (v2) des Unterstützungskolbens (16) unter Berücksichtigung der ermittelten Bremskraftinformation (28), der ermittelten Ist-Geschwindigkeitsgröße (34) und der ermittelten Relativgeschwindigkeitsgröße (40) (S4); und
Ansteuern des Bremskraftverstärkers (14) unter Berücksichtigung der festgelegten Soll-Geschwindigkeitsgröße (50) (S5).

**2.** Verfahren nach Anspruch 1, wobei zum Festlegen der Soll-Geschwindigkeitsgröße (50) eine Soll-Eingangskolbengeschwindigkeitsgröße unter Berücksichtigung der ermittelten Bremskraftinformation (28) festgelegt wird und die Soll-Geschwindigkeitsgröße (50) unter zusätzlicher Berücksichtigung der festgelegten Soll-Eingangskolbengeschwindigkeitsgröße festgelegt wird.

**3.** Verfahren nach Anspruch 1 oder 2, wobei die Relativgeschwindigkeitsgröße (40) mittels eines Differenzwegsensors (32) ermittelt wird.

4. Verfahren nach einem der vorhergehenden Ansprüche, mit den zusätzlichen Schritten:

   Ermitteln einer Ist-Bremsgröße bezüglich eines auf mindestens ein Rad des Fahrzeugs ausgeübten nicht-hydraulischen Zusatz-Bremsmoments (S10);
   Festlegen einer Soll-Bremsmomentänderung unter Berücksichtigung der ermittelten Ist-Bremsgröße oder eines Vergleichs der Ist-Bremsgröße mit einer vorgegebenen Soll-Bremsgröße (S12); und
   Ansteuern mindestens einer Hydraulik-Einrichtung mindesten eines Bremskreises des Fahrzeugs unter Berücksichtigung der festgelegten Soll-Bremsmomentänderung (S13).

5. Verfahren nach Anspruch 4, wobei als mindestens eine Hydraulik-Einrichtung mindestens eine Pumpe und/oder mindestens ein Ventil des mindesten einen Bremskreises unter Berücksichtigung der festgelegten Soll-Bremsmomentänderung so gesteuert wird, dass ein der festgelegten Soll-Bremsmomentänderung entsprechendes Bremsmediumvolumen zwischen dem mindestens einen Bremskreis und mindestens einer Speicherkammer des Bremssystems und/oder einem Hauptbremszylinder (22) des Bremssystems verschoben wird.

6. Verfahren nach Anspruch 4 oder 5, wobei vor dem Ansteuern der mindestens einen Hydraulik-Einrichtung mindestens ein zwischen der mindestens einen Hydraulik-Einrichtung und dem Hauptbremszylinder angeordnetes Ventil geschlossen wird (S14).

7. Steuervorrichtung (24) für ein bremskraftverstärktes Bremssystem eines Fahrzeugs mit:

   einer ersten Empfangseinrichtung (26), welche derart ausgelegt ist, dass eine von einem fahrzeugeigenen Bremskraft-Sensor (11) bereitgestellte Bremskraftinformation (28) bezüglich einer bei einer Betätigung eines Betätigungselements (10) des Bremssystems durch einen Fahrer des Fahrzeugs bereitgestellte Fahrerbremskraft (Ff), welche zumindest teilweise auf einen Eingangskolben (12) des Bremssystems übertragbar ist, mittels der ersten Empfangseinrichtung (26) empfangbar ist;
   **gekennzeichnet durch**
   eine zweite Empfangseinrichtung (30), welche derart ausgelegt ist, dass eine von einem ersten Geschwindigkeits-Sensor (32) bereitgestellte Ist-Geschwindigkeitsgröße (34) bezüglich einer Verstellgeschwindigkeit (v2) eines Unterstützungskolbens (16) des Bremssystems, auf welchen mittels eines Bremskraftverstärkers (14) des Bremssystems eine Unterstützungskraft (Fu) ausübbar ist, mittels der zweiten Empfangseinrichtung (30) empfangbar ist;
   eine dritte Empfangseinrichtung (36), welche derart ausgelegt ist, dass eine von einem zweiten Geschwindigkeits-Sensor (38) bereitgestellte Relativgeschwindigkeitsgröße (40) bezüglich einer Relativgeschwindigkeit (vd) des Unterstützungskolbens (16) in Bezug zu dem Eingangskolben (12) mittels der dritten Empfangseinrichtung (36) empfangbar ist;
   eine Auswerteeinrichtung (42), welche derart ausgelegt ist, dass eine Soll-Geschwindigkeitsgröße (50) bezüglich der Verstellgeschwindigkeit (v2) des Unterstützungskolbens (16) unter Berücksichtigung der empfangenen Bremskraftinformation (28), der empfangenen Ist-Geschwindigkeitsgröße (34) und der empfangenen Relativgeschwindigkeitsgröße (40) mittels der Auswerteeinrichtung (42) festlegbar ist; und
   eine Steuereinrichtung (52), welche dazu ausgelegt ist, unter Berücksichtigung der festgelegten Soll-Geschwindigkeitsgröße (50) ein Steuersignal (54) an den Bremskraftverstärker (14) bereitzustellen.

8. Steuervorrichtung (24) nach Anspruch 7, wobei die Steuervorrichtung (24) zusätzlich umfasst:

   eine vierte Empfangseinrichtung, welche derart ausgelegt ist, dass eine von einer Sensoreinrichtung bereitgestellte Ist-Bremsgröße bezüglich eines auf mindestens ein Rad des Fahrzeugs ausgeübten nicht-hydraulischen Zusatz-Bremsmoments mittels der vierten Empfangseinrichtung empfangbar ist; und
   eine Auswerte- und Steuereinrichtung, welche derart ausgelegt ist, dass eine Soll-Bremsmomentänderung unter Berücksichtigung der bereitgestellten Ist-Bremsgröße oder eines Vergleichs der bereitgestellten Ist-Bremsgröße mit einer vorgegebenen Soll-Bremsgröße mittels der Auswerte- und Steuereinrichtung festlegbar ist, und welche zusätzlich derart ausgelegt ist, dass mindestens eine Hydraulik-Einrichtung mindestens eines Bremskreises des Fahrzeugs unter Berücksichtigung der festgelegten Soll-Bremsmomentänderung mittels der Auswerte -und Steuereinrichtung so steuerbar ist, dass ein der Soll-Bremsmomentänderung entsprechendes Bremsmediumvolumen zwischen dem mindestens einen Bremskreis und mindestens einer Speicherkammer des Bremssystems und/oder einem Hauptbremszylinder (22) des Bremssystems verschiebbar ist.

9. Bremskraftverstärker (14) für ein bremskraftverstärktes Bremssystem eines Fahrzeugs mit einer Steuervorrichtung (24) gemäß dem Anspruch 7 oder 8.

10. Bremskraftverstärktes Bremssystem für ein Fahrzeug mit einer Steuervorrichtung (24) gemäß dem Anspruch 7 oder 8 oder einen Bremskraftverstärker (14) gemäß Anspruch 9.

**Claims**

1. Method for operating a boosted brake system of a vehicle, comprising the steps:

   determining braking force information (28) relating to a driver braking force (Ff), which is applied to the activation element (10) by a driver of the vehicle when an activation element (10) of the brake system is activated, and which is transmitted (S1) at least partially to an input piston (12) of the brake system;
   **characterized by** the steps:

   determining an actual speed variable (34) relating to an adjustment speed (v2) of an assistance piston (16) of the brake system, to which assistance piston (16) an assistance force (Fu) of a brake booster (14) of the brake system is applied (S2);
   determining a relative speed variable (40) relating to a relative speed (vd) of the assistance piston (16) with respect to the input piston (12) (S3);
   defining a setpoint speed variable (50) relating to the adjustment speed (v2) of the assistance piston (16) taking into account the determined braking force information (28), the determined actual speed variable (34) and the determined relative speed variable (40) (S4); and
   actuating the brake booster (14) taking into account the defined setpoint speed variable (50) (S5) .

2. Method according to Claim 1, wherein in order to define the setpoint speed variable (50), a setpoint input piston speed variable is defined taking into account the determined braking force information (28), and the setpoint speed variable (50) is defined additionally taking into account the defined setpoint input piston speed variable.

3. Method according to Claim 1 or 2, wherein the relative speed variable (40) is determined by means of a differential travel sensor (32).

4. Method according to one of the preceding claims, comprising the additional steps:

   determining an actual braking variable relating to a non-hydraulic additional braking torque applied to at least one wheel of the vehicle (S10);
   defining a setpoint braking torque change taking into account the determined actual braking variable or a comparison of the actual braking variable with a predefined setpoint braking variable (S12); and
   actuating at least one hydraulic device of at least one brake circuit of the vehicle taking into account the defined setpoint braking torque change (S13).

5. Method according to Claim 4, wherein at least one pump and/or at least one valve of the at least one brake circuit is controlled, as at least one hydraulic device, taking into account the defined setpoint braking torque change in such a way that a braking medium volume which corresponds to the defined setpoint braking torque change is displaced between the at least one brake circuit and at least one storage accumulator of the brake system and/or a master brake cylinder (22) of the brake system.

6. Method according to Claim 4 or 5, wherein, before the at least one hydraulic device is actuated, at least one valve which is arranged between the at least one hydraulic device and the master brake cylinder is closed (S14).

7. Control apparatus (24) for a boosted brake system of a vehicle, comprising:

   a first receiver device (26) which is configured in such a way that braking force information (28), made available by a braking force sensor (11) mounted in the vehicle and relating to a driver braking force (Ff) which is made available by a driver of the vehicle when an activation element (10) of the brake system is activated, and can be transmitted at least partially to an input piston (12) of the brake system, can be received by means of the first receiver device (26);
   **characterized by**

a second receiver device (30) which is configured in such a way that an actual speed variable (34), made available by a first speed sensor (32) and relating to an adjustment speed (v2) of an assistance piston (16) of the brake system, to which assistance piston (16) an assistance force (Fu) can be applied by means of a brake booster (14) of the brake system, can be received by means of the second receiver device (30);

a third receiver device (36) which is configured in such a way that a relative speed variable (40), made available by a second speed sensor (38) and relating to a relative speed (vd) of the assistance piston (16) with respect to the input piston (12), can be received by means of the third receiver device (36);

an evaluation device (42) which is configured in such a way that a setpoint speed variable (50) relating to the adjustment speed (v2) of the assistance piston (16) can be defined taking into account the received braking force information (28), the received actual speed variable (34) and the received relative speed variable (40) by means of the evaluation device (42); and

a control device (52) which is configured to make available a control signal (54) to the brake booster (14) taking into account the defined setpoint speed variable (50).

8. Control apparatus (24) according to Claim 7, wherein the control apparatus (24) additionally comprises:

a fourth receiver device which is configured in such a way that an actual braking variable, made available by a sensor device and relating to a non-hydraulic additional braking torque applied to at least one wheel of the vehicle, can be received by means of the fourth receiver device; and

an evaluation and control device which is configured in such a way that a setpoint braking torque change can be defined by means of the evaluation and control device taking into account the actual braking variable which is made available or a comparison of the actual braking variable which is made available with a predefined setpoint braking variable, and which is additionally configured in such a way that at least one hydraulic device of at least one brake circuit of the vehicle can be controlled by means of the evaluation and control device taking into account the defined setpoint braking torque change in such a way that a braking medium volume which corresponds to the setpoint braking torque change can be displaced between the at least one brake circuit and at least one storage accumulator of the brake system and/or a master brake cylinder (22) of the brake system.

9. Brake booster (14) for a boosted brake system of a vehicle comprising a control apparatus (24) according to Claim 7 or 8.

10. Boosted brake system for a vehicle comprising a control apparatus (24) according to Claim 7 or 8 or a brake booster (14) according to Claim 9.

**Revendications**

1. Procédé pour faire fonctionner un système de freinage assisté d'un véhicule, comprenant les étapes suivantes:

déterminer une information de force de freinage (28) concernant une force de freinage de conducteur (Ff), qui est exercée sur l'élément d'actionnement (10) lors d'un actionnement d'un élément d'actionnement (10) du système de freinage par un conducteur du véhicule et qui est transmise au moins partiellement à un piston d'entrée (12) du système de freinage (S1);
**caractérisé par** les étapes suivantes:
déterminer une grandeur de vitesse réelle (34) concernant une vitesse de déplacement (v2) d'un piston de soutien (16) du système de freinage, sur lequel une force de soutien (Fu) d'un servofrein (14) du système de freinage est exercée (S2);
déterminer une grandeur de vitesse relative (40) concernant une vitesse relative (vd) du piston de soutien (16) par rapport au piston d'entrée (12) (S3);
fixer une grandeur de vitesse de consigne (50) concernant la vitesse de déplacement (v2) du piston de soutien (16) en tenant compte de l'information de force de freinage déterminée (28), de la grandeur de vitesse réelle déterminée (34) et de la grandeur de vitesse relative déterminée (40) (S4); et
commander le servofrein (14) en tenant compte de la grandeur de vitesse de consigne fixée (50) (S5).

2. Procédé selon la revendication 1, dans lequel, pour la fixation de la grandeur de vitesse de consigne (50), on fixe une grandeur de consigne de la vitesse du piston d'entrée en tenant compte de l'information de force de freinage déterminée (28) et on fixe la grandeur de vitesse de consigne (50) en tenant compte en plus de la grandeur de consigne fixée de la vitesse du piston d'entrée.

**3.** Procédé selon la revendication 1 ou 2, dans lequel on détermine la grandeur de vitesse relative (40) au moyen d'un détecteur de différence de course (32).

**4.** Procédé selon l'une quelconque des revendications précédentes, comportant les étapes supplémentaires suivantes:

déterminer une grandeur de freinage réelle concernant un couple de freinage additionnel non hydraulique exercé sur au moins une roue du véhicule (S10);
fixer une variation de consigne du couple de freinage en tenant compte de la grandeur de freinage réelle déterminée ou d'une comparaison de la grandeur de freinage réelle avec une grandeur de freinage de consigne prédéterminée (S12); et
commander au moins un dispositif hydraulique d'au moins un circuit de freinage du véhicule en tenant compte de la variation de consigne fixée du couple de freinage (S13).

**5.** Procédé selon la revendication 4, dans lequel, au titre d'au moins un dispositif hydraulique, on commande au moins une pompe et/ou au moins une soupape dudit au moins un circuit de freinage en tenant compte de la variation de consigne fixée du couple de freinage, de telle manière qu'un volume de liquide de frein correspondant à la variation de consigne fixée du couple de freinage soit déplacé entre ledit au moins un circuit de freinage et au moins une chambre d'accumulation du système de freinage et/ou un maître-cylindre de frein (22) du système de freinage.

**6.** Procédé selon la revendication 4 ou 5, dans lequel, avant la commande dudit au moins un dispositif hydraulique, on ferme (S14) au moins une soupape disposée entre ledit au moins un dispositif hydraulique et le maître-cylindre de frein.

**7.** Dispositif de commande (24) pour un système de freinage assisté d'un véhicule, avec:

un premier dispositif récepteur (26), qui est conçu de telle manière qu'une information de force de freinage (28) fournie par un détecteur de force de freinage (11) inhérent au véhicule concernant une force de freinage du conducteur (Ff), qui peut être transmise au moins partiellement à un piston d'entrée (12) du système de freinage, produite lors d'un actionnement d'un élément d'actionnement (10) du système de freinage par un conducteur du véhicule, puisse être reçue au moyen du premier dispositif récepteur (26);
**caractérisé par**
un deuxième dispositif récepteur (30), qui est conçu de telle manière qu'une grandeur de vitesse réelle (34) fournie par un premier détecteur de vitesse (32) concernant une vitesse de déplacement (v2) d'un piston de soutien (16) du système de freinage, sur lequel une force de soutien (Fu) peut être exercée au moyen d'un servofrein (14) du système de freinage, puisse être reçue au moyen du deuxième dispositif récepteur (30);
un troisième dispositif récepteur (36), qui est conçu de telle manière qu'une grandeur de vitesse relative (40) fournie par un deuxième détecteur de vitesse (38) concernant une vitesse relative (vd) du piston de soutien (16) par rapport au piston d'entrée (12), puisse être reçue au moyen du troisième dispositif récepteur (36);
un dispositif d'exploitation (42), qui est conçu de telle manière qu'une grandeur de vitesse de consigne (50) concernant la vitesse de déplacement (v2) du piston de soutien (16) puisse être fixée au moyen du dispositif d'exploitation (42) en tenant compte de l'information de force de freinage reçue (28), de la grandeur de vitesse réelle reçue (34) et de la grandeur de vitesse relative reçue (40); et
un dispositif de commande (52), qui est conçu pour fournir un signal de commande (54) au servofrein (14) en tenant compte de la grandeur de vitesse de consigne fixée (50).

**8.** Dispositif de commande (24) selon la revendication 7, dans lequel le dispositif de commande (24) comprend en outre:

un quatrième dispositif récepteur, qui est conçu de telle manière qu'une grandeur de freinage réelle fournie par un dispositif de détection concernant un couple de freinage additionnel non hydraulique exercé sur au moins une roue du véhicule puisse être reçue au moyen du quatrième dispositif récepteur; et
un dispositif d'exploitation et de commande, qui est conçu de telle manière qu'une variation de consigne du couple de freinage puisse être fixée au moyen du dispositif d'exploitation et de commande en tenant compte de la grandeur de freinage réelle fournie ou d'une comparaison de la grandeur de freinage réelle fournie avec une grandeur de freinage de consigne prédéterminée, et qui est en outre conçu de telle manière qu'au moins un dispositif hydraulique d'au moins un circuit de freinage du véhicule puisse être commandé au moyen du dispositif d'exploitation et de commande en tenant compte de la variation de consigne du couple de freinage fixée, de telle manière qu'un volume de liquide de frein correspondant à la variation de consigne du couple de freinage puisse être déplacé entre ledit au moins un circuit de freinage et au moins une chambre d'accumulation du système de freinage et/ou un maître-cylindre de frein (22) du système de freinage.

9. Servofrein (14) pour un système de freinage assisté d'un véhicule avec un dispositif de commande (24) selon la revendication 7 ou 8.

10. Système de freinage assisté pour un véhicule avec un dispositif de commande (24) selon la revendication 7 ou 8 ou un servofrein (14) selon la revendication 9.

**Fig. 1A**

$$sd = s1 - s \cdot 2$$

$$vd = v1 - v \cdot 2$$

**Fig. 1B**

**Fig. 1C**

**Fig. 2**

Fig. 3

Fig. 4

S10

S11

S12

S14

S13

S1

S2

S3

S4

S5

**Fig. 5**

**IN DER BESCHREIBUNG AUFGEFÜHRTE DOKUMENTE**

**In der Beschreibung aufgeführte Patentdokumente**

- DE 10327553 A1